(19) Europäisches Patentamt
European Patent Office
Office européen des brevets

(11) **EP 3 077 083 B1**

(12) **EUROPEAN PATENT SPECIFICATION**

(45) Date of publication and mention
of the grant of the patent:
**17.07.2019 Bulletin 2019/29**

(21) Application number: **14806393.6**

(22) Date of filing: **01.12.2014**

(51) Int Cl.:
*B01D 53/94* (2006.01)          *B01D 46/24* (2006.01)
*B01J 37/08* (2006.01)          *B01J 37/02* (2006.01)
*F01N 3/28* (2006.01)          *F01N 3/035* (2006.01)
*B01J 29/072* (2006.01)          *B01J 29/08* (2006.01)
*B01J 29/14* (2006.01)          *B01J 29/46* (2006.01)
*B01J 29/50* (2006.01)          *B01J 29/56* (2006.01)
*B01J 29/70* (2006.01)          *B01J 29/76* (2006.01)
*B01J 29/18* (2006.01)          *B01J 29/24* (2006.01)
*B01J 29/40* (2006.01)

(86) International application number:
**PCT/GB2014/053562**

(87) International publication number:
**WO 2015/082892 (11.06.2015 Gazette 2015/23)**

(54) **WALL-FLOW FILTER COMPRISING CATALYTIC WASHCOAT**

WANDSTROMFILTER MIT KATALYTISCHER BESCHICHTUNG

FILTRE A ECOULEMENT DE PAROI COMPORTANT UN ENCOLLAGE CATALYTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.12.2013 GB 201321265**

(43) Date of publication of application:
**12.10.2016 Bulletin 2016/41**

(73) Proprietor: **Johnson Matthey Public Limited
Company
London EC4A 4AB (GB)**

(72) Inventors:
• **ARULRAJ, Kaneshalingham
Royston
Hertfordshire SG8 5HE (GB)**
• **CHANDLER, Guy Richard
Cambridge
Cambridgeshire CB23 1HB (GB)**

• **COLLINS, Neil Robert
Royston
Hertfordshire SG8 0QL (GB)**
• **PHILLIPS, Paul Richard
Royston
Hertfordshire SG8 5YR (GB)**
• **PREST, David William
Royston
Hertfordshire SG8 5HE (GB)**

(74) Representative: **Nunn, Andrew Dominic
Johnson Matthey PLC
Intellectual Property Department
Orchard Road
Royston, Hertfordshire SG8 5HE (GB)**

(56) References cited:
EP-A1- 1 842 591          EP-A1- 1 911 507
EP-A1- 2 087 215          EP-A1- 2 236 783
EP-A1- 2 380 650          EP-A1- 2 623 183
EP-A1- 2 712 669          WO-A1-2013/007467
WO-A1-2014/104179          US-A1- 2011 020 185

**Description**

The present invention relates to a catalysed filter for treating exhaust gas comprising particulate matter emitted from an internal combustion engine, particularly a vehicular internal combustion engine, which filter comprising a honeycomb wall-flow filter substrate comprising an array of interconnecting porous walls which define an array of longitudinally extending first channels and second channels, wherein the first channels are bordered on their sides by the second channels, wherein ends of the first channels are plugged at a first end of the honeycomb and ends of the second channels are plugged at a second end of the honeycomb, which filter comprising a catalytic washcoat. The invention also relates to a method of making such a catalysed filter.

US 5221484 discloses a catalytic filtration device for separating a particulate-containing feed stock into a filtrate and a particulate-containing filter cake, having a monolith of porous material containing a plurality of passageways extending longitudinally from an inlet end face to an outlet end face, having a plurality of plugs in the ends of the passageways at the inlet end face and at the outlet end face to prevent direct passage of the feed stock through the passageways from the inlet end face to the outlet end face; a microporous membrane selected to separate the feed stock into a filtrate and particulate-containing filter cake, the membrane applied to at least the wall surfaces of the passageways open at the inlet end face and of mean pore size smaller than the mean pore size of the porous material; the device being regenerable by withdrawal of the filter cake from the inlet end face of the device; and a catalyst applied to the device for catalysing a reaction in the filtrate as it passes through the device.

The device disclosed in US 5221484 is described for application in the field of stationary air pollution control for combustion gases from which fly ash can be removed while simultaneously removing gaseous contaminants such as oxides of nitrogen, sulfur dioxide, and volatile organic vapours; coal gasification, in which it is desirable to remove particulate matter, followed by catalysing a reaction of one or more gaseous species present; and oxidation processes to remove organic vapours from a variety of industrial sources to remove a variety of air toxics enumerated in the 1990 Amendments to the US Clean Air Act of 1970.

In one example, an EX47 cordierite monolith having a mean pore size of 12$\mu$m and a porosity of 50% was coated with a ceramic membrane, which coated monolith was then saturated in a solution of ammonium vanadate catalyst precursor. The vanadate was then precipitated within the monolith and the monolith was dried then calcined, which turned the precipitated vanadate into vanadium pentoxide. The monolith passageways were then plugged with a low temperature setting cement (Adhesive No. 919, Cotronics Corp.) so as to form a dead-ended filter.

Our inventors have considered ways of coating modern filter designs for use in treating vehicular exhaust gases and have discovered, very surprisingly, that for certain asymmetric filter designs, the resulting coated product provides a number of very useful advantages for use in exhaust systems as such or in combination with one or more additional exhaust gas after-treatment components.

For example, it can be desirable to locate a specific catalytic washcoat on only one-side (outlet) of a wall-flow filter. So, in a preferred arrangement a catalytic selective catalytic reduction (SCR) catalyst coating is disposed within a porous channel wall of the wall-flow filter and only on the outlet-wall because this design maximises both NO$_x$ removal and NO$_2$-soot removal of soot collected in the inlet channels (if SCR catalyst were present on the inlet wall, NO$_2$ generated upstream of the on-wall inlet channel SCR catalyst might be removed by the reaction of SCR catalyst before the NO$_2$ + soot reaction (disclosed in EP patent publication no. 341832) can occur, i.e. the two reactions would compete with one another).

Asymmetric wall-flow filter designs are known, for example, from WO 2005/030365, which discloses a honeycomb filter including an array of interconnecting porous walls which define an array of first channels and second channels. The first channels are bordered on their sides by the second channels and have a larger hydraulic diameter than the second channels. The first channels have a square cross-section, with corners of the first channels having a shape such that the thickness of the porous walls adjoining the corners of the first channels is comparable to the thickness of the porous walls adjoining edges of the first and second channels. In use, the first channels having the larger hydraulic diameter are oriented to the upstream side. Society of Automotive Engineers SAE Technical Paper Series 2007-01-0656 explains that: "There is a pressure drop penalty [for a catalysed asymmetric cell technology (ACT) wall flow filter] in the clean state for the ACT design due to the contraction and expansion of gases at the filter channel inlet and outlet. However, a filter spends very little time in a totally clean (fully regenerated) state while in operation on a vehicle."

WO 2005/030365 also explains that the advantages of the asymmetric filter design include increased effective surface area available for collecting soot and ash particles in the inlet portion of the honeycomb filter, thus increasing the overall storage capacity of the honeycomb filter. Common general knowledge textbook "Catalytic Air Pollution Control - Commercial Technology", 3rd Edition, Ronald M. Heck et al, John Wiley & Sons, Inc. Hoboken, New Jersey, USA (2009) pp. 338-340 explains that: "Such a [asymmetric filter] channel design enables higher ash storage capacity combined with lower ash-loaded back pressure due to larger hydraulic diameter and higher open volume at inlet. The ACT design also helps preserve the mechanical and thermal durability of the filter".

US 2011/020185 A1 discloses a gas filter structure for filtering particulate-laden gases, of the honeycomb type and comprising an assembly of longitudinal adjacent channels of mutually parallel axes separated by porous filtering walls, said channels being alternately blocked off at one or the other of the ends of the structure so as to define inlet channels and outlet channels for the gas to be filtered and so as to force said gas to pass through the porous walls separating the inlet and outlet channels, said structure being such that, in cross section: the ratio R of the sum of the areas of the inlet channels to the sum of the areas of the outlet channels is greater than 1; at least some of the porous walls are wavy so as to be concave relative to the centre of the inlet channels and convex in their middle relative to the centre of the outlet channels; and the outlet channels possess at least one rounded corner.

EP 1911507 A1 discloses a diesel engine having a fuel injection nozzle to which pressurized fuel is supplied from a pump. The nozzle has a pressure sensor detecting the fuel pressure and a lift sensor sensing a lift magnitude of a needle valve. An electronic control unit (ECU) computes a variation ratio of the fuel pressure value which is measured by the pressure sensor. The ECU computes a non-increasing point in an increasing part of variation ratio and judge the point to be a timing for starting the fuel injection of the nozzle. The ECU also computes the actual fuel injection amount in accordance with the fuel injection timing as well as the fuel pressure and the lift amount of the needle valve both at the various points. The ECU control the actual injection amount to be identical to a target fuel injection amount.

In researching into alternative ways in which filters can be coated, the inventors found, very surprisingly, that when an "asymmetric" honeycomb substrate without end-plugging on either end was coated with a liquid washcoat predetermined preferentially to coat on-wall surfaces of the channels and the channels of the resulting coated honeycomb substrate were cleared by application of compressed air or vacuum, the channels having the greater hydraulic diameter prior to coating remained coated with on-wall washcoat, whereas on-wall washcoat on the channels having the lesser hydraulic diameter prior to coating was blown or drawn off. The amount of coating remaining on the wall surfaces of the previously hydraulically larger, uncoated channels was proportional to a difference in hydraulic diameter between the uncoated, smaller hydraulic diameter and the uncoated, larger hydraulic diameter, i.e. once the backpressure between channels equalises, the air flow does not clear the remaining on-wall coating from the channels having the uncoated, larger hydraulic diameter and an on-wall coating is left behind.

Methods of coating wall-flow filter substrates including asymmetric filter designs include those disclosed in Applicant's WO 99/47260, i.e. a method of coating a monolithic support, comprising the steps of (a) locating a containment means on top of a support, (b) dosing a pre-determined quantity of a liquid component into said containment means, either in the order (a) then (b) or (b) then (a), and (c) by applying pressure or vacuum, drawing said liquid component into at least a portion of the support, and retaining substantially all of said quantity within the support; and WO 2011/080525, i.e. a method of coating a honeycomb monolith substrate comprising a plurality of channels with a liquid comprising a catalyst component, which method comprising the steps of: (i) holding a honeycomb monolith substrate substantially vertically; (ii) introducing a pre-determined volume of the liquid into the substrate via open ends of the channels at a lower end of the substrate; (iii) sealingly retaining the introduced liquid within the substrate; (iv) inverting the substrate containing the retained liquid; and (v) applying a vacuum to open ends of the channels of the substrate at the inverted, lower end of the substrate to draw the liquid along the channels of the substrate and into the channels walls.

However, according to the invention, the wall-flow filter is "constructed" only after a catalytic washcoat(s) is applied, i.e. a honeycomb flow-through substrate having end plugs which have been inserted into a first end thereof, wherein the first channels of the honeycomb flow-through substrate are bordered on their sides by second channels thereof, wherein the first channels have a larger hydraulic diameter than the second channels and having the required porosity, mean pore size, cell density etc. for use in the wall-flow filter by coating channels with a catalytic washcoat and then inserting end plugs into a second end thereof to form an end product having the well-known wall flow filter arrangement.

Therefore, according to a first aspect, the invention provides a method of making a catalysed wall-flow filter substrate according to any of claims 1-3 for treating exhaust gas comprising particulate matter emitted from an internal combustion engine, which method comprising:

providing a honeycomb substrate monolith having a first end and a second end, having physical properties and parameters pre-selected for use in a honeycomb wall-flow filter substrate and comprising an array of interconnecting porous walls defining an array of longitudinally extending first and second channels,
wherein the first channels are bordered on their sides by the second channels and wherein the first channels have a larger hydraulic diameter than the second channels,

wherein the first channels are open at both the first and the second end of the honeycomb substrate monolith and the second channels are open at the first end of the honeycomb substrate monolith but are blocked with end plugs at the second end thereof,
contacting porous channel wall surfaces which define the first channels of the honeycomb substrate monolith with a liquid catalytic washcoat to produce a coated honeycomb substrate monolith, wherein the liquid catalytic washcoat is coated on first channel walls from the second end of the honeycomb substrate monolith, and wherein at least one of:

a liquid catalytic washcoat solids content;
a liquid catalytic washcoat rheology;
a porosity of the honeycomb substrate monolith;
a mean pore size of the honeycomb substrate monolith;
a liquid catalytic washcoat volumetric mean particle size; and
a liquid catalytic washcoat D90 (by volume),

is preselected so that at least some of the liquid catalytic washcoat remains on a surface of the porous channel walls of the first channels or both remains on the surface of the porous channel walls and permeates the porous channel walls of the first channels;
drying and calcining the coated honeycomb substrate monolith; and
inserting end plugs into open ends of the first channels at the first end of the honeycomb substrate monolith to form the catalysed wall-flow filter substrate and washcoating the interconnecting porous walls and/or the surfaces of the second channels from the direction of the open ends of the second channels,
wherein the catalytic washcoat on the channel walls of the first channels; located in the interconnecting porous walls; or located on the second channel walls, is each selected from the group consisting of a hydrocarbon trap, a three-way catalyst, a NOx absorber, an oxidation catalyst, a selective catalytic reduction (SCR) catalyst, a H2S trap, an ammonia slip catalyst (ASC) and a lean $NO_x$ catalyst, and
wherein the catalytic washcoat of the first channels is different from the catalytic washcoat of the second channels.

"D50" or "D90" or similar references to particle size of a particulate washcoat component herein are to Laser Diffraction Particle Size Analysis using a Malvern Mastersizer 2000, which is a volume-based technique (i.e. D50 and D90 may also be referred to as Dv50 and Dv90 (or D(v,0.50) and D(v,0.90)) and applies a mathematical Mie theory model to determine a particle size distribution. Diluted washcoat samples should be prepared by sonication in distilled water without surfactant for 30 seconds at 35 watts.

Pore size measurements of porous substrates can be obtained using the mercury intrusion porosimetry technique.

By "physical properties and parameters pre-selected for use in a honeycomb wall-flow filter substrate", it is intended to mean one or more of the following: porosity, pore size distribution, open frontal area, specific filtration area, cell density, filter volume, total filtration area (TFA), backpressure index (BPI), mechanical integrity factor (MIF), porosity, pore size distribution, coefficient of thermal expansion, crush strength, isostatic strength, modulus of rupture (MOR), structural (or E) modulus, dynamic fatigue constant, thermal conductivity, specific heat capacity and density.

The honeycomb flow-through substrate monolith having physical properties and parameters pre-selected for use in a wall-flow filter substrate can be made from any suitable material, but are generally ceramic and include cordierite, silicon carbide (optionally segmented), aluminium titanate (AT), zirconium phosphate, mullite or silicon nitride with cordierite, silicon carbide and AT presently preferred.

Washcoat location in a monolith substrate can be influenced by a number of factors. One such factor is the water content of the washcoat. Very generally, the higher the solids content in the washcoat, the less carrier medium is available to transport the solids and the washcoat is more likely to be coated linearly, i.e. on and along a wall surface of the substrate monolith, than to move laterally, i.e. into a porous wall.

For similar reasons, the selection of a porosity for the monolith substrate can also influence the location of the washcoat. Generally and for a given washcoat, the higher the porosity of the substrate monolith, the more opportunity there is for the washcoat to enter the porous wall.

The availability of a washcoat to enter into a porous wall can also be influenced by rheology modifiers. Rheology modifiers, i.e. thickeners such as xanthan gum, influence how mobile a carrier medium is during coating. A relatively more viscous washcoat, whose viscosity has been increased by addition of a rheology modifier, is more likely to remain a wall surface of a monolith substrate, because the carrier medium is preferentially bound into the washcoat and less available to transport the washcoat solids into a porous wall.

Washcoat solids location can also be influenced by the particle size of the washcoat as expressed by the mean particle size (by volume) (also known as D50) or the D90 (the particle size below which are 90% of the particles in the washcoat): generally for a given filter having a porosity "x" and a mean pore size "y", the smaller the particle size of the washcoat, the more likely the washcoat solids may be transported into a porous wall.

The selection of the filter properties can also influence location. So as mentioned above, decreasing porosity generally predisposes to on-wall rather than in-wall coating. Also as mentioned above, for a washcoat having a volumetric mean particle size "a", a volumetric D90 "b" and a rheology "c", by increasing the mean pore size of the monolith substrate, the washcoat is more likely to enter into the porous walls thereof.

By "at least some of the liquid catalytic washcoat remains on a surface if the porous channel walls" herein we mean that some of the liquid catalytic washcoat can enter the interconnecting porous walls but that at least some of the liquid catalytic washcoat remains at a surface of the interconnecting porous walls to form a layer or layers supported on a wall surface of the channels and extending laterally into a hollow section defined in part by wall surfaces of the uncoated substrate, which layer(s) having a thickness of >5μm such as from 10 to 300μm, 20-250μm, 25-200μm, 30-150μm, 35-100μm or 40-75μm.

It is also possible to apply a catalyst washcoat to the first or second channels of the asymmetric flow through honeycomb substrate, dry and calcine and then to insert end plugs into those channels (either before or after drying and calcining) at a first end of the honeycomb substrate before washcoating the uncoated channels (either the second or the first channels) and then inserting end plugs into the second or first washcoated channels at a second end of the honeycomb substrate. However, it can be seen that this process requires more process steps and so is less preferred.

The filter may also be prepared to provide a catalytic washcoat applied via first channels which is different from a catalytic washcoat on second channels. For example, a honeycomb flow-through substrate monolith having a first end and a second end and having physical properties and parameters pre-selected for use in a honeycomb wall-flow filter substrate and comprising an array of interconnecting porous walls defining an array of longitudinally extending first and second channels, wherein the first channels are bordered on their sides by the second channels is coated either from the direction of the first end or the second end with no end plugs in the substrate, then first (or second) channels of the substrate at one end (the first end or the second end thereof) are plugged in the usual, chequer board arrangement, then a second coating is applied to the remaining second (or first) open channels either from the direction of the first end or the second end, then the final end-plugging is inserted in the channels at the second (or first) end. For example, an in-wall SCR coating can be applied from the direction of the first end of the substrate to the first (or second) channels of an unplugged substrate, then end plugs can be applied at the end of the substrate intended for the outlet end of the filter, then an on-wall oxidation catalyst coating can be applied to the second (or first) channels (i.e. that will become the inlet channels) via the plugged end of the substrate, i.e. also from the direction of the first end of the substrate, then end plugs can be inserted at the end of the substrate intended for the inlet end of the filter, i.e. at the second end thereof.

The method of the present invention provides a number of very useful advantages. Possibly the most important is that current processes to achieve products such as those including different coatings in the first and second channels are multistep. For example, coating is applied within the wall and then a subsequent coating is applied to place coating on the wall. The multiple steps to achieve these designs are undesirable because of high energy and equipment usage. Furthermore, the subsequent coating selectively coats the smaller pores (due to capillary forces) of the first coating, and higher backpressure can result. Therefore it is highly desirable to achieve these complex designs by a process that requires less process steps to provide improved product performance. Further benefits on reduced resource utilisation can be obtained by using a low temperature setting cement for post-coating plug insertion. In that way, reduced temperature curing can be obtained without the need to re-fire the part at calcination temperatures e.g. ≥500°C.

According to embodiments, there are a number of ways in which the step of contacting the porous channel walls corresponding to channel walls of the first channels of the honeycomb substrate can be done. However, all require some relative movement between washcoat and substrate. For example, in one embodiment, the honeycomb substrate monolith is oriented such that the channels thereof are substantially vertical and liquid catalytic washcoat is introduced in the channels from a lower end thereof. In one embodiment, this step of introducing the liquid catalytic washcoat from below is done by dipping the honeycomb substrate monolith into a bath of liquid catalytic washcoat. Preferably this dipping step is done to a depth such that the channel wall surfaces at an upper end of the honeycomb substrate monolith are uncoated, i.e. dipping is done so that less than a total length of the channels are coated. This is because the inventors have found that catalyst-free coating provides a more consistent adhesion between the post-applied plug cement composition and the honeycomb substrate monolith. Following dipping the honeycomb substrate monolith can be removed from the bath, residual washcoat can be removed under gravity and open channels can be cleared by application of a vacuum or over-pressure, e.g. compressed air, such as an air knife.

In another embodiment, the step of introducing the liquid catalytic washcoat from below is done by pushing a predetermined quantity of liquid catalytic washcoat up into the honeycomb substrate monolith, as is described in the Applicant's WO 2011/080525. Preferably, the predetermined quantity of liquid catalytic washcoat is less than is required to coat an entire length of the channels, i.e. channels walls at an upper end of the honeycomb substrate monolith are uncoated for the same reason as mentioned hereinabove, i.e. to promote adhesion between uncoated substrate monolith and plug cement. Following pushing up of the liquid catalytic washcoat open channels can be cleared by application of a vacuum or over-pressure.

In another embodiment, the step of introducing the liquid catalytic washcoat from below is done by drawing liquid catalytic washcoat into the channels by application of a vacuum at an upper end of the honeycomb substrate. Following drawing up of the liquid catalytic washcoat, residual washcoat can be removed under gravity and the open ended channels can be cleared by application of a vacuum or over-pressure.

According to another embodiment, the step of contacting the porous channel walls corresponding to channel walls of the first channels of the honeycomb substrate is done by orienting the honeycomb substrate monolith such that the channels thereof are substantially vertical and introducing liquid catalytic washcoat onto an upper end surface of the honeycomb substrate monolith and drawing liquid catalytic washcoat into the channels by application of a vacuum at a lower end of the honeycomb substrate monolith, such as is described in Applicant's WO 99/47260. Such method may require the use of a rheology modifier in the washcoat to prevent uncontrolled running of the washcoat into the channels of the substrate. Application of vacuum to the washcoat including rheology modifier causes sheer thinning of the washcoat and subsequent coating of the channels. Following drawing down of the liquid catalytic washcoat, open channels can be cleared by application of a vacuum or over-pressure.

According to another embodiment, differential coating, i.e. coating applied to channels of a flow-through substrate monolith or a flow-through substrate monolith coated on only one end thereof intended only for use as inlet (or outlet) channels and not on the corresponding outlet (or inlet) channels, can be obtained by inserting an array of elongate conduits having an injector nozzle disposed at a leading end thereof into the channels to be coated and providing relative movement between the array of conduits and the substrate while injecting washcoat onto the channel walls via the conduit/injectors. Channels blocked by excess washcoat can be cleared by vacuum or over-pressure. Such a method and apparatus is disclosed in US patent no. 5543181.

In a preferred embodiment according to the second aspect of the present invention, liquid catalytic washcoat is coated on first channel walls from a direction of a second end of the honeycomb substrate monolith wherein end plugs have been inserted in the second channels at the second end of the honeycomb substrate monolith. In a further step to this embodiment, following the step of end plugging the first channels at the first end of the honeycomb substrate monolith, the interconnecting porous walls and/or the surfaces of the second channel walls are washcoated from the direction of the open ends of the second channels, i.e. from the direction of the first end of the honeycomb substrate monolith.

For reasons discussed above relating to plug cement adhesion to the channels walls, according to preferred embodiments of the invention, a region of the channel walls contacted by end plugs are free of catalytic washcoat.

Also preferred for cement composition for forming the end plugs in the step of inserting plugs into at least the first end or the second end of the honeycomb substrate to form the wall-flow filter is a low temperature setting cement, for reasons mentioned hereinabove.

According to a further aspect, the invention provides a catalysed honeycomb wall-flow filter for treating exhaust gas comprising particulate matter emitted from an internal combustion engine, which filter comprising:

a honeycomb substrate having a first end and a second end and comprising an array of interconnecting porous walls defining an array of longitudinally extending first channels and second channels,
wherein the first channels are bordered on their sides by the second channels and have a larger hydraulic diameter than the second channels,
wherein the first channels are end-plugged at a first end of the honeycomb substrate and the second channels are end-plugged at a second end of the honeycomb substrate,
wherein channel wall surfaces of the first channels comprise an on- wall-type catalytic washcoat
wherein a catalytic washcoat is located at on-wall surfaces, permeates the interconnecting porous wall or is located both at on-wall surfaces and permeates the interconnecting porous wall of the second channel walls,
wherein the catalytic washcoat in the first channels and the second channels, is each selected from the group consisting of a hydrocarbon trap, a three-way catalyst, a NOx absorber, an oxidation catalyst, a selective catalytic reduction (SCR) catalyst, a H2S trap, an ammonia slip catalyst (ASC) and a lean NOx catalyst,
wherein the catalytic washcoat of the first channels is different from the catalytic washcoat of the second channels, and
wherein the honeycomb substrate has an axial length L and the sum of the axial lengths of the washcoat coating in the first channel and the washcoat coating in the second channel is ≥100% and <130% of the axial length L.

By "on-wall-type catalytic coating" herein we mean a washcoat layer or layers supported on a wall surface of the first channels and extending laterally into a hollow section defined in part by wall surfaces of the uncoated substrate, which layer(s) having a thickness of >5$\mu$m such as from 10 to 400$\mu$m, 15 to 325$\mu$m, 20-250$\mu$m, 25-200$\mu$m, 30-150$\mu$m, 35-100$\mu$m or 40-75$\mu$m.

Asymmetric designs of wall-flow filters for use in the present invention include hexagon/triangle; square/rectangle; octagon/square; asymmetric square; and so-called "wavy cell" (see SAE Technical papers 2004-01-0950, S. Bardon et al.; 2004-01-0949, K. Ogyu et al.; and 2004-01-0948, D.M. Young et al.)

According to the present invention, the catalytic washcoat in each channel is selected from the group consisting of a hydrocarbon trap, a three-way catalyst, a $NO_x$ absorber, an oxidation catalyst, a selective catalytic reduction (SCR) catalyst, a $H_2S$ trap, an ammonia slip catalyst (ASC) and a lean $NO_x$ catalyst and combinations of any two or more thereof. For example, in preferred embodiments, inlet surfaces are coated with a TWC washcoat or $NO_x$ absorber composition and the outlet surfaces are coated with SCR washcoat. In this arrangement, intermittent rich running of the engine, e.g. to regenerate the $NO_x$ absorption capacity of the $NO_x$ absorber, can generate ammonia *in situ* on the TWC or $NO_x$ absorber for use in reducing $NO_x$ on SCR catalyst on the outlet surfaces. Similarly, an oxidation catalyst can include hydrocarbon trap functionality. In one embodiment, the inlet surfaces are not coated with SCR catalyst. In this embodiment, preferably the inlet channels are coated with an oxidation catalyst for oxidising NO to $NO_2$ and the outlet

channels are coated with SCR catalyst.

In one embodiment, an on-wall surface layer corresponding to the catalytic washcoat on the first channels and/or the second channels is not a catalyst containing one or both of platinum and palladium also comprising alumina, ceria, zirconia, titania and zeolite.

According to the present invention, catalytic washcoat in the first channel walls is different from any catalytic washcoat in the second channel walls.

The following Tables provide details of combinations of catalyst types to be applied to first and second channels and for orientation to the upstream or downstream side in an exhaust system for a lean burn internal combustion engine, with comments and various advantages indicated.

Table 1

| | Asymmetric Channel Orientation in Exhaust System | | Comments/Advantage |
|---|---|---|---|
| | Larger hydraulic diameter channel upstream/inlet side | Smaller hydraulic diameter channel downstream/outlet side | |
| Catalyst Type | SCR on-wall or both on-wall and in-wall | SCR on-wall, in-wall or both on-wall and in-wall | SCR catalyst in upstream and downstream locations can be the same or different. Downstream end can comprise ammonia slip catalyst (ASC) coating. |
| | $NO_x$ Trap on-wall or both on-wall and in-wall | SCR on-wall, in-wall or both on-wall and in-wall | Ammonia generated in-situ from contacting the $NO_x$ trap with rich exhaust gas can be stored/used to reduce $NO_x$ on the SCR catalyst. Downstream end can comprise ammonia slip catalyst (ASC) coating. |
| | CSF on-wall or both on-wall and in-wall | CSF on-wall, in-wall or both on-wall and in-wall | |
| | TWC on-wall or both on-wall and in-wall | TWC on-wall, in-wall or both on-wall and in-wall | Three-way catalyst components may be separated between upstream and downstream channels, e.g. $Pd/Al_2O_3$ or $Pt/Pd/Al_2O_3$ inlet; Rh/Oxygen storage component outlet. |
| | TWC on-wall or both on-wall and in-wall | SCR on-wall, in-wall or both on-wall and in-wall | Downstream end can comprise ammonia slip catalyst (ASC) coating. |
| | $NO_x$ trap on-wall or both on-wall and in-wall | $H_2S$ trap on-wall, in-wall or both on-wall and in-wall | Segregation of the $H_2S$ trap components such as Fe, Cu, Mn, Zn or Ni could otherwise poison oxidation activity of the $NO_x$ trap. |

| Diesel oxidation catalyst (DOC) on-wall or both on-wall and in-wall | CSF on-wall, in-wall or both on-wall and in-wall |
|---|---|
| | |

Table 2

| Catalyst Type | Asymmetric Channel Orientation in Exhaust System | | Comments/Advantage |
|---|---|---|---|
| | **Smaller hydraulic channel upstream/inlet side** | **Larger hydraulic channel downstream/outlet side** | |
| | SCR in-wall | SCR on-wall or both on-wall and in-wall | SCR catalyst in upstream and downstream locations can be the same or different. In-wall SCR catalyst on inlet maximises $NO_2$ + soot oxidation, so less competition with SCR reaction. Preferred arrangement is SCR catalyst active at high temperature in-wall/upstream; lower temperature activity SCR catalyst on downstream channel walls. Downstream end can comprise ammonia slip catalyst (ASC) coating. |
| | SCR on-wall, in-wall or both on-wall and in-wall | Ammonia Slip Catalyst on-wall or both on-wall and in-wall. | |
| | CSF on-wall, in-wall or both on-wall and in-wall | $H_2S$ trap on-wall | Segregation of the $H_2S$ trap components such as Fe, Cu, Mn, Zn or Ni could otherwise poison oxidation activity of the CSF. |
| | TWC on-wall, in-wall or both on-wall and in-wall | TWC on-wall or both on-wall and in-wall | Three-way catalyst components may be separated between upstream and downstream channels, e.g. $Pd/Al_2O_3$ or $Pt/Pd/Al_2O_3$ inlet; Rh/Oxygen storage component outlet. |

| Asymmetric Channel Orientation in Exhaust System | | Comments/Advantage |
|---|---|---|
| **Smaller hydraulic channel upstream/inlet side** | **Larger hydraulic channel downstream/outlet side** | |
| $NO_x$ trap on-wall or both on-wall and in-wall | $H_2S$ trap on-wall | Segregation of the $H_2S$ trap components such as Fe, Cu, Mn or Ni could otherwise poison oxidation activity of the $NO_x$ trap. |
| $NO_x$ trap on-wall or both on-wall and in-wall | SCR catalyst on-wall | Ammonia generated in-situ from contacting the $NO_x$ trap with rich exhaust gas can be stored/used to reduce $NO_x$ on the SCR catalyst. Downstream end can comprise ammonia slip catalyst (ASC) coating. |

Uncoated honeycomb substrates for the wall-flow filters of the present invention can have a porosity of 40-70%, preferably >50%. A mean pore size of the interconnecting porous walls of the substrate is from 8 to 45$\mu$m, e.g. preferably 10-30$\mu$m. In one embodiment, the porosity of the uncoated honeycomb substrate is >50% and the mean pore size is in the range 10-30 $\mu$m.

Another advantage of the present invention is that it provides increased design options for zoned and overlapping coating arrangements, both of which are embodiments according to the present invention. As used herein, a zoned arrangement is one in which are disposed two or more separate and distinct regions or combinations of layers of catalyst composition. So, for example, channels of a flow-through substrate having a length "L" and selected to have the properties desired in a filter after end-plugs are inserted can be coated with a first catalyst composition introduced from a first end of the flow-through substrate to a length less than "L". This part-coated substrate can then be dried and optionally also fired and then a second, different catalyst composition can be introduced from the opposite end of the substrate. The second catalyst composition can stop short of the coated zone of the first catalyst composition, it can abut the coated zone of the first catalyst composition or it can overlap the coated zone of the first catalyst composition. Where the second catalyst composition stops short of or abuts the coated zone of the first catalyst composition, the regions coated with the first and second catalyst composition can be referred to as first and second "zones"; where the second catalyst composition overlaps the coated zone of the first catalyst composition, there may exist three discrete zones: a first, single layered zone defined at one end by the first end of the substrate; a second, single layered zone defined at one end by a second end of the substrate; and an intervening, two layered zone between the first and the second zones. Each zone may have a separate and distinct catalytic functionality. End plugs can then be inserted as described hereinabove to form a zone-coated wall-flow filter either before or after the second catalyst coating is dried or both dried and calcined.

In embodiments, the length of the first and second zones can be split between 20:80 to 80:20 relative to the total length of the substrate, for example 40:60, 30:70, 70:30, 50:50 or 60:40.

Contrastingly, in an overlapping arrangement, a flow-through substrate having end plugs introduced in a first end in the wall-flow filter (i.e. chequer board) pattern but wherein channel ends at a second end are unplugged (i.e. no end plugs yet inserted) and a length "L", the substrate having been selected to have the properties desired in a filter after end-plugs are inserted into the second end, is coated with a first catalyst composition introduced from the first end of the flow-through substrate (i.e. from the end including the end plugs) to a length less than "L" or to a length "L", e.g. 10%, 20%, 25%, 30%, 50%, 60%, 70%, 80% or 90%.. Subsequently, end plugs are inserted into the coated channels at the second end of the coated substrate to produce the known wall-flow filter arrangement, either before or after a drying step and/or both drying and calcination steps; and then a second catalyst composition is coated on channels open at the second end of the substrate by introducing the second catalyst composition into the channels open at the second end of the fully constructed wall-flow filter substrate. A length of coating on the second catalyst composition can be less than "L" or "L".

In this overlapping arrangement, the length of the catalyst coating introduced from each of the first and second ends dictates whether the first and second catalyst coatings interact in the cross-section of the porous wall. So, for example, where the first catalyst coating length is 80% of L and the second catalyst coating length is also 80% of L, there is an intervening 40% overlap between the first and second catalyst coatings in the porous walls of the substrate.

In embodiments, the honeycomb substrate has an axial length L and the sum of the axial lengths of the washcoat coating in the first channel and the washcoat coating in the second channel is ≥L, e.g. 100%<130%. Alternatively, the total axial length of coating can be less than 100%, i.e. with an uncoated region in between. In a further alternative, an in-wall coating can be a 100% length coating and on-wall coatings in the first and second channels can add up to less than 100% of the axial length L, with an axial length of coating in the first channels being different from an axial length of coating in the second channels. However, in the preferred arrangement, the sum of the axial lengths of the washcoat coating in the first channel and the washcoat coating in the second channel is ≥L, e.g. 100%<130%.

In achieving a ≥100% axial coating in sum between the first and second channels, can be from 10:90 to 90:10, such as from 20:80 to 80:20. Alternatively, a 1:1, i.e. 50:50 coating length can be used. Such differential axial length coatings can be beneficial to reducing back pressure and to "tune" a relative level of activity to a desired amount between the inlet and outlet channels, e.g. to increase NO oxidation on a CSF coating on the inlet channels for improved SCR activity in outlet channels. A further advantage can be in a filter comprising a TWC wherein individual components of the TWC composition are split between inlet and outlet coatings. So an inlet coating can be one component, e.g. a Pt supported on alumina (i.e. Pt/alumina) or Pt-Pd/alumina of the TWC; and the outlet coating can be Rh supported on an oxygen storage component or Rh supported on both alumina and an oxygen storage component. Where there is a significant axial overlap between these first and second catalyst coatings, beneficial "back diffusion" of exhaust gas in the porous walls between the inlet and outlet coatings, i.e. gas travels between the first catalyst composition in the porous walls to the second catalyst composition then back again and so on. This arrangement can result in an overall improved conversion of pollutants.

Preferably, the total washcoat loading on the filter according to the first aspect of the invention, including embodiments in which only the first, outlet channel is coated, or combinations of coatings on the outlet channel walls and within the porous channel walls and/or on the second, inlet channel walls is in the range 0.50-5.00 g in$^{-3}$ (30.5-305.1 g/1), e.g. ≥1.00 g/in$^3$ (61.0 g/1) or ≥2.00 g/in$^3$ (122.1 g/1).

The catalytic washcoat, such as the TWC, NO$_x$ absorber, oxidation catalyst, hydrocarbon trap and the lean NO$_x$ catalyst, can contain one or more platinum group metals, particularly those selected from the group consisting of platinum, palladium and rhodium.

TWCs are intended to catalyse three simultaneous reactions: (i) oxidation of carbon monoxide to carbon dioxide, (ii) oxidation of unburned hydrocarbons to carbon dioxide and water; and (iii) reduction of nitrogen oxides to nitrogen and oxygen. These three reactions occur most efficiently when the TWC receives exhaust from an engine running at or about the stoichiometric point. As is well known in the art, the quantity of carbon monoxide (CO), unburned hydrocarbons (HC) and nitrogen oxides (NO$_x$) emitted when gasoline fuel is combusted in a positive ignition (e.g. spark-ignited) internal combustion engine is influenced predominantly by the air-to-fuel ratio in the combustion cylinder. An exhaust gas having a stoichiometrically balanced composition is one in which the concentrations of oxidising gases (NO$_x$ and O$_2$) and reducing gases (HC and CO) are substantially matched. The air-to-fuel ratio that produces the stoichiometrically balanced exhaust gas composition is typically given as 14.7:1.

Theoretically, it should be possible to achieve complete conversion of O$_2$, NO$_x$, CO and HC in a stoichiometrically balanced exhaust gas composition to CO$_2$, H$_2$O and N$_2$ and this is the duty of the three-way catalyst. Ideally, therefore, the engine should be operated in such a way that the air-to-fuel ratio of the combustion mixture produces the stoichiometrically balanced exhaust gas composition.

A way of defining the compositional balance between oxidising gases and reducing gases of the exhaust gas is the lambda (λ) value of the exhaust gas, which can be defined according to equation (1) as:

$$\text{Actual engine air-to-fuel ratio/Stoichiometric engine air-to-fuel ratio,} \qquad (1)$$

wherein a lambda value of 1 represents a stoichiometrically balanced (or stoichiometric) exhaust gas composition, wherein a lambda value of >1 represents an excess of O$_2$ and NO$_x$ and the composition is described as "lean" and wherein a lambda value of <1 represents an excess of HC and CO and the composition is described as "rich". It is also common in the art to refer to the air-to-fuel ratio at which the engine operates as "stoichiometric", "lean" or "rich", depending on the exhaust gas composition which the air-to-fuel ratio generates: hence stoichiometrically-operated gasoline engine or lean-burn gasoline engine.

It should be appreciated that the reduction of NO$_x$ to N$_2$ using a TWC is less efficient when the exhaust gas composition is lean of stoichiometric. Equally, the TWC is less able to oxidise CO and HC when the exhaust gas composition is rich. The challenge, therefore, is to maintain the composition of the exhaust gas flowing into the TWC at as close to the stoichiometric composition as possible.

Of course, when the engine is in steady state it is relatively easy to ensure that the air-to-fuel ratio is stoichiometric. However, when the engine is used to propel a vehicle, the quantity of fuel required changes transiently depending upon the load demand placed on the engine by the driver. This makes controlling the air-to-fuel ratio so that a stoichiometric exhaust gas is generated for three-way conversion particularly difficult. In practice, the air-to-fuel ratio is controlled by an engine control unit, which receives information about the exhaust gas composition from an exhaust gas oxygen (EGO) (or lambda) sensor: a so-called closed loop feedback system. A feature of such a system is that the air-to-fuel ratio oscillates (or perturbates) between slightly rich of the stoichiometric (or control set) point and slightly lean, because there is a time lag associated with adjusting air-to-fuel ratio. This perturbation is characterised by the amplitude of the air-to-fuel ratio and the response frequency (Hz).

The active components in a typical TWC comprise one or both of platinum and palladium in combination with rhodium, i.e. Pt/Rh, Pd/Rh or Pt/Pd/Rh, or even palladium only (no rhodium) or rhodium only (no platinum or palladium), supported on a high surface area oxide, and an oxygen storage component.

When the exhaust gas composition is slightly rich of the set point, there is a need for a small amount of oxygen to consume the unreacted CO and HC, i.e. to make the reaction more stoichiometric. Conversely, when the exhaust gas goes slightly lean, the excess oxygen needs to be consumed. This was achieved by the development of the oxygen storage component that liberates or absorbs oxygen during the perturbations. The most commonly used oxygen storage component (OSC) in modern TWCs is cerium oxide (Ce02) or a mixed oxide containing cerium, e.g. a Ce/Zr mixed oxide. However, more recently different oxygen storage components have begun to be used such as ceria-zirconia-alumina mixed oxides (CZA). Rare earth element dopants such as praseodymium and/or lanthanum can be used to improve thermal durability.

NO$_x$ absorber catalysts (NACs) are known e.g. from US patent no. 5,473,887 and are designed to adsorb nitrogen oxides (NO$_x$) from lean exhaust gas (lambda >1) and to desorb the NO$_x$ when the oxygen concentration in the exhaust gas is decreased. Desorbed NO$_x$ may be reduced to N$_2$ with a suitable reductant, e.g. gasoline fuel, promoted by a catalyst component, such as rhodium, of the NAC itself or located downstream of the NAC. In practice, control of oxygen concentration can be adjusted to a desired redox composition intermittently in response to a calculated remaining $NO_x$ adsorption capacity of the NAC, e.g. richer than normal engine running operation (but still lean of stoichiometric or lambda = 1 composition), stoichiometric or rich of stoichiometric (lambda <1). The oxygen concentration can be adjusted by a number of means, e.g. throttling, injection of additional hydrocarbon fuel into an engine cylinder such as during the exhaust stroke or injecting hydrocarbon fuel directly into exhaust gas downstream of an engine manifold.

A typical NAC formulation includes a catalytic oxidation component, such as platinum, a significant quantity, i.e. substantially more than is required for use as a promoter such as a promoter in a TWC, of a $NO_x$-storage component, such as barium, a reduction catalyst, e.g. rhodium, a reducible oxide such as ceria or an optionally stabilised ceria-zirconia and a support material such as alumina or magnesium aluminate ($MgAl_2O_4$), preferably a magnesium aluminate having substoichiometric quantities of MgO, i.e. below 28.3 wt% MgO, compared with the spinel. One mechanism commonly given for $NO_x$-storage from a lean exhaust gas for this formulation is:

$$NO + \tfrac{1}{2}\, O_2 \rightarrow NO_2 \qquad (2);$$

and

$$BaO + NO_2 + \tfrac{1}{2}\, O_2 \rightarrow Ba(NO_3)_2 \qquad (3),$$

wherein in reaction (2), the nitric oxide reacts with oxygen on active oxidation sites on the platinum to form $NO_2$. Reaction (3) involves adsorption of the $NO_2$ by the storage material in the form of an inorganic nitrate.

At lower oxygen concentrations and/or at elevated temperatures, the nitrate species become thermodynamically unstable and decompose, producing NO or $NO_2$ according to reaction (4) below. In the presence of a suitable reductant, these nitrogen oxides are subsequently reduced by carbon monoxide, hydrogen and hydrocarbons to $N_2$, which can take place over the reduction catalyst (see reaction (5)).

$$Ba(NO_3)_2 \rightarrow BaO + 2NO + 3/2\, O_2 \text{ or } Ba(NO_3)_2 \rightarrow BaO + 2NO_2 + \tfrac{1}{2}\, O_2 \qquad (4);$$

and

$$NO + CO \rightarrow \tfrac{1}{2}\, N_2 + CO_2 \qquad (5);$$

(Other reactions include $Ba(NO_3)_2 + 8H_2 \rightarrow BaO + 2NH_3 + 5H_2O$ followed by $NH_3 + NO_x \rightarrow N_2 + yH_2O$ or $2NH_3 + 2O_2 + CO \rightarrow N_2 + 3H_2O + CO_2$ etc.).

In the reactions of (2)-(5) above, the reactive barium species is given as the oxide. However, it is understood that in the presence of air most of the barium is in the form of the carbonate or possibly the hydroxide. The skilled person can adapt the above reaction schemes accordingly for species of barium other than the oxide and sequence of catalytic coatings in the exhaust stream.

Modern $NO_x$ absorber catalysts coated on honeycomb flow-through monolith substrates are typically arranged in layered arrangements. However, multiple layers applied on a filter substrate can create backpressure problems. It is highly preferable, therefore, if the $NO_x$ absorber catalyst for use in the present invention is a "single layer" $NO_x$ absorber catalyst. Particularly preferred "single layer" $NO_x$ absorber catalysts comprise a first component of rhodium supported on a ceria-zirconia mixed oxide or an optionally stabilised alumina (e.g. stabilised with silica or lanthana or another rare earth element) in combination with second components which support platinum and/or palladium. The second components comprise platinum and/or palladium supported on an alumina-based high surface area support and a particulate "bulk" ceria ($CeO_2$) component, i.e. not a soluble ceria supported on a particulate support, but "bulk" ceria capable of supporting the Pt and/or Pd as such. The particulate ceria comprises a $NO_x$ absorber component and supports an alkaline earth metal and/or an alkali metal, preferably barium, in addition to the platinum and/or palladium. The alumina-based high surface area support can be magnesium aluminate e.g. $MgAl_2O_4$, for example.

The preferred "single layer" NAC composition comprises a mixture of the rhodium and platinum and/or palladium support components. These components can be prepared separately, i.e. pre-formed prior to combining them in a mixture, or rhodium, platinum and palladium salts and the supports and other components can be combined and the rhodium, platinum and palladium components hydrolysed preferentially to deposit onto the desired support.

Oxidation catalysts promote the oxidation of carbon monoxide to carbon dioxide and unburned hydrocarbons to carbon dioxide to water. Where the oxidation catalyst is used for treating diesel exhaust gas emissions, the oxidation catalyst is typically referred to as a diesel oxidation catalyst or DOC. Standard oxidation catalysts include platinum and/or palladium on a high surface area support, typically gamma alumina, optionally doped to improve sulphur tolerance and/or catalyst durability and optional zeolite, e.g. aluminosilicate zeolite Beta, for trapping hydrocarbons at lower temperatures for release and combustion at higher temperatures. Suitable alumina dopants include rare-earth metals such as lanthanum and/or praseodymium. The duty of a DOC is to oxidise hydrocarbons (including a so-called soluble organic fraction often adsorbed onto solid soot particles and aerosol droplets of unburned fuel) and carbon monoxide and - according to design choice - oxidation of nitrogen monoxide to nitrogen dioxide, e.g. to promote the combustion of trapped particulate matter downstream in $NO_2$ (the so-called CRT® effect) or to increase the $NO_2/NO_x$ ratio to promote $NO_x$ reduction on a downstream SCR catalyst.

A variation on the diesel oxidation catalyst is a composition designed not only to oxidise HC and CO but also to promote particulate matter combustion *in situ* on a filter by a combination of direct contact oxidation and the CRT® effect. As desired, the formulation can be adapted also for NO oxidation to promote $NO_x$ conversion on a downstream SCR catalyst, as discussed hereinabove in connection with DOCs. A filter coated with such a catalyst composition is often referred to as a catalysed soot filter or CSF. CSF catalyst compositions often comprise platinum and/or palladium supported on combinations of gamma alumina and optionally stabilised ceria and optional zeolite, e.g. aluminosilicate zeolite Beta for hydrocarbon trapping. The optionally stabilised ceria component is included for promoting soot combustion activity. A preferred ceria stabiliser is zirconium (in a mixed oxide with ceria), but may also include one or more dopants for improving thermal durability such as lanthanum and/or praseodymium. Alternative precious metals to platinum group metals such as silver can also be used. However, in the alternative to precious metals, CSF compositions can comprise base metals such as alkali metals such as potassium, alkaline earth metals, e.g. Ba and/or Sr or manganese.

Hydrocarbon traps typically include molecular sieves and may also be catalysed e.g. with a platinum group metal such as platinum or a combination of both platinum and palladium. Palladium and/or silver has been found to promote hydrocarbon trapping activity.

SCR catalysts for use in the present invention promote the reactions selectively $4NH_3 + 4NO + O_2 \rightarrow 4N_2 + 6H_2O$ (i.e. 1:1 $NH_3$:NO); $4NH_3 + 2NO + 2NO_2 \rightarrow 4N_2 + 6H_2O$ (i.e. 1:1 $NH_3$:$NO_x$; and $8NH_3 + 6NO_2 \rightarrow 7N_2 + 12H_2O$ (i.e. 4:3 $NH_3$:$NO_x$) in preference to undesirable, non-selective side-reactions such as $2NH_3 + 2NO_2 \rightarrow N_2O + 3H_2O + N_2$ and can be selected from the group consisting of at least one of Cu, Hf, La, Au, In, V, lanthanides and Group VIII transition metals, such as Fe, supported on a refractory oxide or molecular sieve. Particularly preferred metals are Ce, Fe and Cu and combinations of any two or more thereof. Suitable refractory oxides include $Al_2O_3$, $TiO_2$, $CeO_2$, $SiO_2$, $ZrO_2$ and mixed oxides containing two or more thereof. The non-zeolite catalyst can also include tungsten oxide, e.g. $V_2O_5/WO_3/TiO_2$, $WO_x/CeZrO_2$, $WO_x/ZrO_2$ or $Fe/WO_x/ZrO_2$.

An $H_2S$ trap can comprise a base metal oxide or a base metal loaded on an inorganic oxide, wherein the base metal can be selected from the group consisting of iron, manganese, copper, nickel, zinc and mixtures thereof, and the base metal oxide can be selected from the group consisting of iron oxide, manganese oxide, copper oxide, nickel oxide, zinc oxide and mixtures thereof, (see also Applicant's WO 2012/175948 and WO 2008/075111). Where the $H_2S$ trap catalyst comprises a platinum group metal, preferably, the base metal is manganese or zinc; and the base metal oxide is manganese oxide or zinc oxide. This is because we have found that copper and iron can poison the activity of the platinum group metal, e.g. platinum and/or palladium, to oxidise CO and HC unless they are segregated from the platinum group metal, e.g. pre-formed prior to addition to a washcoat. Zinc and manganese do not poison platinum group metal CO and HC oxidation to the same extent as copper or iron and so provides the skilled person greater choice manufacturing choice, e.g. no pre-forming of platinum group metal washcoat powders required; zinc oxide or manganese oxide can be added to a washcoat containing solute platinum group metal salts as is. There is a voluntary ban in Europe on the use of nickel and nickel oxide in exhaust gas aftertreatment devices because of human sensitivity to nickel. Hence, the use of nickel as a base metal and nickel oxide as a base metal oxide is less preferred.

Lean $NO_x$ catalysts, sometimes also called hydrocarbon-SCR catalysts, DeNO$_x$ catalysts or even non-selective catalytic reduction catalysts, include $Pt/Al_2O_3$, Cu- Pt-, Fe-, Co- or Ir- exchanged ZSM-5, protonated zeolites such as H-ZSM-5 or H-Y zeolites, perovskites and $Ag/Al_2O_3$. In selective catalytic reduction (SCR) by hydrocarbons (HC), HC react with $NO_x$, rather than with $O_2$, to form nitrogen, $CO_2$ and water according to equation (6):

$$\{HC\} + NOx \rightarrow N_2 + CO_2 + H_2O \qquad (6)$$

The competitive, non-selective reaction with oxygen is given by Equation (7):

$$\{HC\} + O_2 \rightarrow CO_2 + H_2O \qquad (7)$$

Therefore, good HC-SCR catalysts are more selective for reaction (6) than reaction (7).

In one or more embodiments, the catalytic washcoat on the first channel walls and/or on the second channel walls, comprises one or more molecular sieve, such as an aluminosilicate zeolite or a SAPO. Catalytic washcoats which can include molecular sieves include hydrocarbon traps, oxidation catalysts, a selective catalytic reduction (SCR) catalysts (as described hereinabove) and lean $NO_x$ catalysts. TWCs and $NO_x$ traps typically do not contain molecular sieves because of the higher temperatures generated by positive ignition, e.g. spark ignition internal combustion engines.

However, it is possible to include molecular sieves in TWCs for their hydrocarbon trapping function in applications where the filter is located in a relatively cool position in the exhaust system, e.g. a so-called "underfloor" position. Generally, $NO_x$ traps do not include a molecular sieve because molecular sieves are generally acidic in nature e.g. active sites may contain Bronsted acid sites, and such activity can conflict with basic materials, e.g. cerium oxide or alkaline earth metals which function to adsorb mildly acidic nitrogen dioxide. However, in certain applications, e.g. for treating exhaust gas from compression ignition engines, such as diesel engines, molecular sieves can be used if segregated, e.g. by disposing the molecular sieve in a different layer from the basic components, for the purpose of treating e.g. relatively high quantities of hydrocarbons in exhaust gas emitted during certain phases of a drive cycle.

In any of the catalysts disclosed herein, e.g. TWCs, DOCs, CSFs and $NO_x$ traps, in order to reduce back-pressure, it can be beneficial to use highly porous support materials, such as those known as wide pore alumina and disclosed in WO 99/56876.

In embodiments the molecular sieve, e.g. aluminosilicate zeolites, can be so-called small, medium or large pore molecular sieve. Small pore molecular sieves are those having a maximum ring opening of 8 atoms. Medium pore molecular sieves have a maximum ring opening of 10 atoms. Large pore molecular sieves have a maximum ring opening of 12 atoms. It is even possible to use so-called meso-pore molecular sieves having a maximum ring opening of >12 atoms. However, in most applications small, medium or large pore molecular sieves will have the necessary properties.

Small pore molecular sieves, e.g. zeolites are generally not used for hydrocarbon trapping functionality for e.g. hydrocarbon traps, oxidation catalysts, $NO_x$ traps, TWCs and lean $NO_x$ catalysts; medium and large pore molecular sieves are preferred for this functionality. A preferred role of small pore molecular sieves is as a component in selective catalytic reduction catalysts, e.g. copper containing or iron containing small pore aluminosilicate zeolites.

Preferred molecular sieves for use in SCR catalysts are selected from the group consisting of AEI, ZSM-5, ZSM-20, ERI, LEV, mordenite, BEA, Y, CHA, MCM-22 and EU-1, of which AEI, ERI, LEV, CHA and EU-1 are small pore zeolites. AEI and CHA are particularly preferred. BEA is a preferred molecular sieve for use in hydrocarbon traps or oxidation catalysts (for CSF catalysts).

In embodiments, the molecular sieves can be un-metallised or metallised with at least one metal selected from the group consisting of groups IB, IIB, IIIA, IIIB, IVB, VB, VIB, VIB and VIII of the periodic table. Where metallised, the metal can be selected from the group consisting of Cr, Co, Cu, Fe, Hf, La, Ce, In, V, Mn, Ni, Zn, Ga and the precious metals Ag, Au, Pt, Pd and Rh. Such metallised molecular sieves can be used in a process for selectively catalysing the reduction of nitrogen oxides in internal combustion engine exhaust gas using a reductant. By "metallised" herein we mean to include molecular sieves including one or more metals incorporated into a framework of the molecular sieve e.g. Fe in-framework Beta and Cu in-framework CHA. As mentioned above, where the reductant is a hydrocarbon, the process is sometimes called "hydrocarbon selective catalytic reduction (HC-SCR)", "lean $NO_x$ catalysis" or "DeNO$_x$ catalysis", and particular metals for this application include Cu, Pt, Mn, Fe, Co, Ni, Zn, Ag, Ce, Ga. Hydrocarbon reductant can either be introduced into exhaust gas by engine management techniques, e.g. late post injection or early post injection (so-called "after injection").

Small pore molecular sieves are potentially advantageous for use in SCR catalysts - see for example WO 2008/132452. Where the reductant is a nitrogenous reductant (so-called "$NH_3$-SCR"), metals of particular interest are selected from the group consisting of Ce, Fe and Cu. Suitable nitrogenous reductants include ammonia. Ammonia can be generated in situ e.g. during rich regeneration of a NAC disposed upstream of the filter or by contacting a TWC, catalytic oxidation component or $NO_x$ trap with engine-derived rich exhaust gas (see the alternatives to reactions (4) and (5) hereinabove). Alternatively, the nitrogenous reductant or a precursor thereof can be injected directly into the exhaust gas. Suitable precursors include ammonium formate, urea and ammonium carbamate. Decomposition of the precursor to ammonia and other by-products can be by hydrothermal or catalytic hydrolysis.

Ammonia slip catalysts (or ASCs) are typically based on relatively low loadings e.g. 0.1-10 $g/in^3$ (6.1-610.2 g/1), such as 2.5-6 $g/in^3$ (152.6-366.1 g/1), of precious metals such as platinum supported on a relatively high surface area support. Highly preferred ASCs comprise the supported precious metal (e.g. Ag, Au, Pt, Pd, Rh, Ru or Ir) in a lower layer with an upper layer of a SCR catalyst, such as Fe-Beta or Cu-CHA or Cu-AEI. In this regard, the supported precious metal "layer" can be introduced "in wall" via the downstream channels and the SCR catalyst applied in an on-wall "overlayer". To reduce backpressure issues associated with multiple layering in a filter, the precious metal support can be a wide pore material such as wide pore alumina (see hereinabove), or catalyst supports such as sols can be used.

In further particular embodiments, the surface porosity of the washcoat is increased by including voids therein. Exhaust gas catalysts having such features are disclosed, e.g. in our WO 2006/040842 and WO 2007/116881.

By "voids" in the washcoat layer herein, we mean that a space exists in the layer defined by solid washcoat material. Voids can include any vacancy, fine pore, tunnel-state (cylinder, prismatic column), slit etc., and can be introduced by including in a washcoat composition for coating on the filter substrate a material that is combusted during calcination of a coated filter substrate, e.g. chopped cotton, plastic beads or materials to give rise to pores made by formation of gas on decomposition or combustion, e.g. acetic acid, starch or other organics. Where the method of the invention involves applying washcoat to a partially plugged honeycomb substrate, solid pore formers such as polymer beads and chopped cotton can get filtered out in the filter along the axial length of the wall, so that the pore formers collect at one end of the axial washcoating. In which case, liquid pore formers such as citric acid are preferred.

The average void ratio of the washcoat can be from 5-80%, whereas the average diameter of the voids can be from 0.2 to 500μm, such as 10 to 250μm.

The cell density of wallflow filters can have a cell density of >150 cells per square inch (cpsi) (23.3 cell cm$^{-2}$) but is preferably in the range of 200-400 cpsi (31.0-62.0 cells cm$^{-2}$).

According to a further aspect, the invention provides an exhaust system for an internal combustion engine, which system comprising a filter according to the present invention. In preferred embodiments, the second channels are oriented to the upstream side (see catalyst combinations set out in Table 2). Alternatively, in embodiments e.g. for the catalyst combinations shown in Table 1, the second channels of the filter according to the third, fourth, fifth or sixth aspect of the present invention are oriented to the downstream side.

Preferred arrangements of the exhaust system, where one or more catalytic washcoat comprises a SCR catalyst or lean NO$_x$ catalyst, according to the seventh aspect of invention comprise means for injecting a reductant fluid into exhaust gas upstream of the filter. Where such reductant is hydrocarbon, e.g. engine fuel, such injection means can include a suitably programmed engine management means controlling fuel injectors for one or more engine cylinders for emitting hydrocarbon rich (i.e. richer than normal running conditions) exhaust gas to the exhaust system. Exhaust systems where hydrocarbon injection may be required are those in which the system as a whole or the filter in particular includes a lean NO$_x$ catalyst component, but particularly a NO$_x$ trap. Such exhaust gas enrichment can be used to reduce NO$_x$ to generate in-situ ammonia for use in reducing NO$_x$ on downstream SCR catalyst components.

However, in a particularly preferred embodiment for use in combination with a wall-flow filter comprising SCR catalytic washcoat, the reductant fluid is a nitrogenous compound, e.g. ammonia or a precursor thereof, e.g. urea. Such "means for injecting a reductant fluid" can include a source of nitrogenous compound, e.g. urea, such as a reservoir of the nitrogenous compound. Where the exhaust system as a whole includes a SCR catalyst, the SCR catalyst can be disposed on the filter (see e.g. Tables 1 and 2). However, it is also possible for the SCR catalyst to be disposed on a separate and distinct monolith substrate downstream of the filter, e.g. where the filter comprises a NO$_x$ trap or CSF. In this case, the reductant injector may be desirably located to inject reductant or a precursor thereof between the filter and the downstream SCR catalyst.

According to a further aspect there is provided an internal combustion engine comprising an exhaust system according to the invention. The internal combustion engine can be a stoichiometric positive ignition (e.g. spark ignition) engine but is preferably a lean burn compression ignition e.g. diesel engine or a lean burn positive ignition engine. Positive ignition engines for use in this aspect of the invention can be fuelled by gasoline fuel, gasoline fuel blended with oxygenates including methanol and/or ethanol, liquid petroleum gas or compressed natural gas.

In order that the invention may be more fully understood, the following Examples are provided with reference to one of more of the accompanying drawings, in which:

Figure 1 is a schematic image of a wall-flow filter;

Figure 2 is a schematic image of a wall-flow filter based on an asymmetric arrangement of inlet and outlet channels, such as is disclosed in WO 2005/030365;

Figure 3 shows a scanning electron microscope (SEM) cross-section image of a relatively high porosity filter substrate coated by dipping into slurry at 43% solids (w/w);

Figure 4 shows a SEM cross-section image of the relatively high porosity filter substrate coated by dipping into a slurry at 36% solids (w/w);

Figure 5 shows SEM cross-section images of high porosity coated filter, coated by the method disclosed in WO 99/47260 at 35% solids (w/w) with increased viscosity (using rheology modifiers); and

Figure 6 shows SEM cross-section images of high porosity coated filter with plugs on, coated by the method and apparatus disclosed in WO 2011/080525.

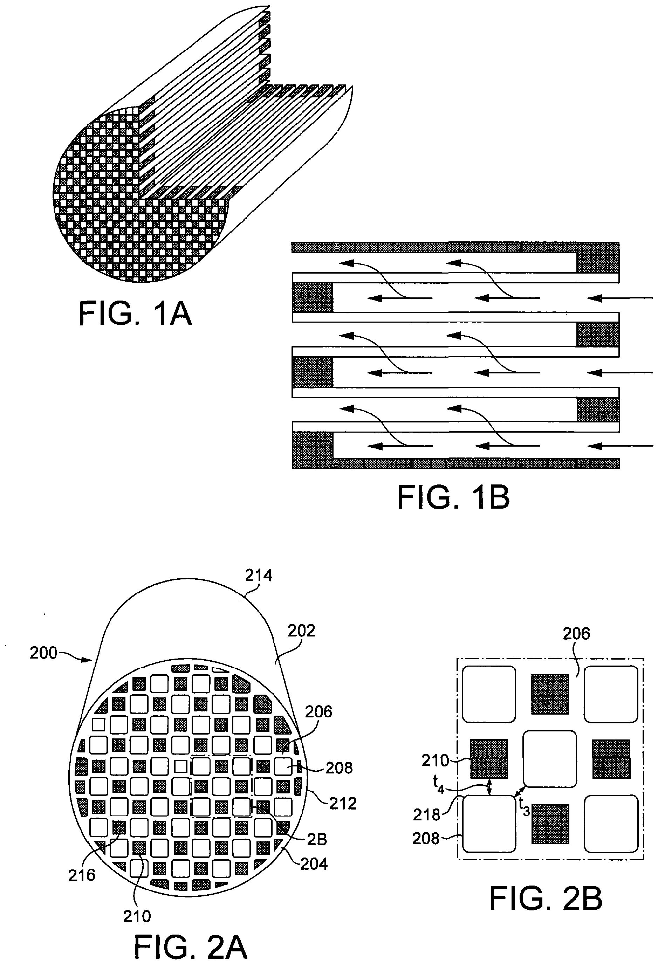

Figure 1 shows the well-known wall-flow filter arrangement whereby a plurality of first channels is plugged at an upstream end and a plurality of second channels not plugged at the upstream end are plugged at a downstream end, wherein the arrangement of the first and second channels is such that laterally and vertically adjacent channels are plugged at opposite ends in the appearance of a checkerboard by inserting substantially gas impermeable plugs at the ends of the channels in the desired pattern according to EP 1837063. This filter arrangement is also disclosed in SAE 810114.

Figure 2 shows an asymmetric wall-flow filter arrangement from the Figures of WO 2005/030365.

## EXAMPLES (not according to the invention)

Example 1

A Cu-aluminosilicate zeolite selective catalytic reduction (SCR) catalyst was prepared by milling a pre-prepared sample to D90 by volume of ≤5μm. Two washcoat samples were prepared using the SCR catalyst sample and deionised water. A first sample was a lower viscosity sample adjusted to 36% w/w solids, including a binder at 10% w/w. A second sample was a higher viscosity sample adjusted to 43% w/w solids, including a binder at 10% w/w. Neither the relatively high viscosity sample nor the relatively low viscosity sample included any surfactant or rheology modifier. However, the viscosity of both samples was in the range 10-40 cp as measured on a Brookfield Viscometer at 50 rpm using spindle 1.

A lower end (with the channels extending vertically) of an uncoated asymmetric relatively high porosity (about 60% porosity) aluminium titanate filter substrate (including end plugs at each end in the "normal" wall-flow filter configuration) in the asymmetric square configuration was dipped into a "container" of the relatively low solids washcoat. The coated filter was removed from the washcoat sample, excess washcoat was drained therefrom under gravity, then a vacuum from a continuous airflow bench was applied to the lower end of the filter (the same end into which the washcoat sample was introduced). The resulting parts were dried, then calcined and a cross-section inspected by SEM. The target washcoat loading was 2.2 g/in$^3$ (134.3 g/1).

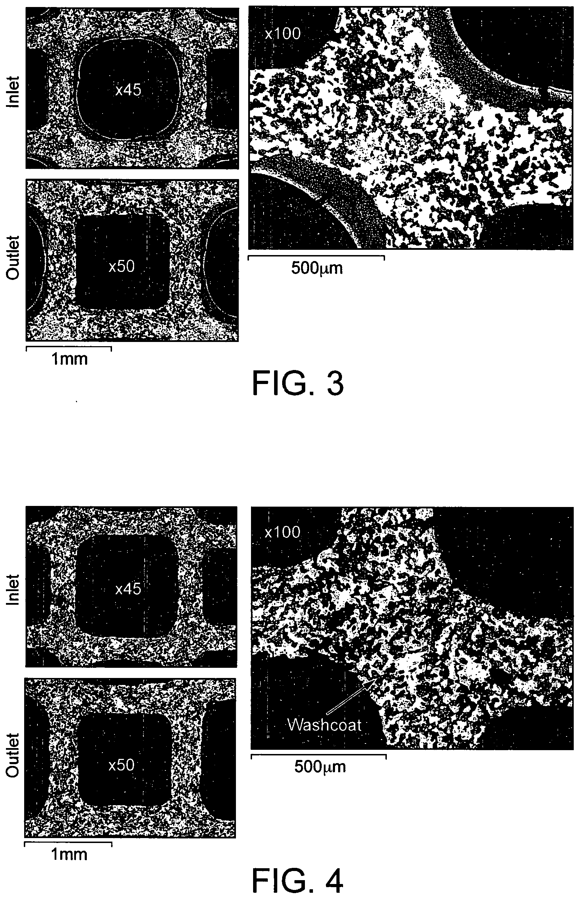

The results are shown in Figures 3 and 4, from which it can be seen that the relatively high solids washcoat sample is present within-wall but only on-wall in alternate channels (the channels having the larger hydraulic diameter prior to coating); whereas the relatively low solids washcoat sample is present only within wall.

From these results it can be concluded that, by correct selection of washcoat solids, the amount of on-wall coating in the channels having the larger uncoated hydraulic diameter can be controlled from zero to a desired amount.

Example 2

A new washcoat sample was prepared using the same Cu-alumino silicate zeolite SCR catalyst as described in Example 1, deionised water, a binder at 10% w/w solids (35% solids w/w in total) and 0.2 weight% of a commercially available hydroxymethylcellulose as rheology modifier. The viscosity of the new washcoat sample was 2000cp measured on a Brookfield Viscometer at 50 rpm, spindle 3. This new washcoat sample was coated on a relatively high porosity (about 60% porosity), uncoated aluminium titanate filter substrates used in Example 1 using the method and apparatus described in Applicant's WO 99/47260, i.e. a method of coating a monolithic filter substrate, comprising the steps of (a) locating a containment means on top of the monolithic filter substrate, (b) dosing a pre-determined quantity of a liquid component into said containment means, in the order (a) then (b); and (c) by applying vacuum, drawing said liquid component into at least a portion of the substrate, and retaining substantially all of said quantity within the substrate. The resulting coated product was dried then calcined. The target washcoat loading was 2.2 g/in$^3$ (134.3 g/1).

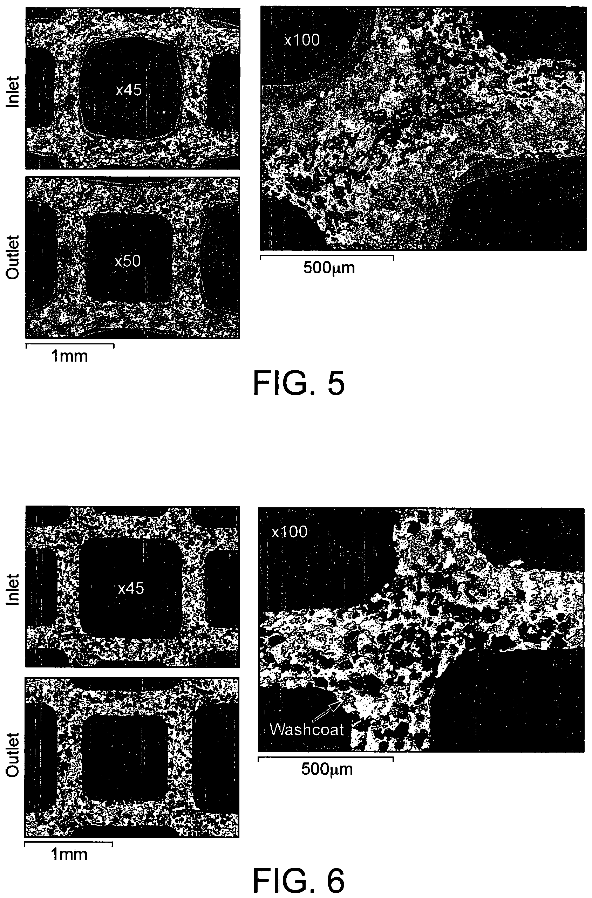

SEM images of the final product are shown in Figure 5, from which it can be seen that washcoat is present within-wall but only on-wall in alternate channels (channels having the larger hydraulic diameter prior to coating). This Example shows that by increasing viscosity at relatively low washcoat solids (compare with the results shown in Example 1, Figure 4; and Example 3, Figure 6 (see below)), washcoat may be directed to an on-wall location in the channels having the larger hydraulic diameter prior to coating.

Example 3

The 35% w/w solids sample of Example 2 but without rheology modifier was used to coat the same relatively high porosity aluminium titanate filter substrate used in Example 2, but instead using the method and apparatus disclosed in WO 2011/080525, i.e. comprising the steps of: (i) holding a honeycomb monolith substrate substantially vertically; (ii) introducing a pre-determined volume of the liquid into the substrate via open ends of the channels at a lower end of the substrate; (iii) sealingly retaining the introduced liquid within the substrate; (iv) inverting the substrate containing the retained liquid; and (v) applying a vacuum to open ends of the channels of the substrate at the inverted, lower end of the substrate to draw the liquid along the channels of the substrate. In this Example, washcoat was introduced into the open channels of a first end of the filter followed by a drying, then a calcination step. Next, the product of this first "pass" coating step was coated in a second "pass" to introduce SCR catalyst coating into the substrate from the opposite, i.e. second, end of the substrate, followed by drying and then calcination steps. The target washcoat loading was 2.2 g/in$^3$ (134.3 g/1).

The results are shown in Figure 6, from which it can be seen that the washcoat solids have all been directed in-wall by the process.

**Claims**

1. A catalysed honeycomb wall-flow filter for treating exhaust gas comprising particulate matter emitted from an internal combustion engine, which filter comprising:

   a honeycomb substrate having a first end and a second end and comprising an array of interconnecting porous walls defining an array of longitudinally extending first channels and second channels,
   wherein the first channels are bordered on their sides by the second channels and have a larger hydraulic diameter than the second channels,
   wherein the first channels are end-plugged at a first end of the honeycomb substrate and the second channels are end-plugged at a second end of the honeycomb substrate,
   wherein channel wall surfaces of the first channels comprise an on- wall-type catalytic washcoat
   wherein a catalytic washcoat is located at on-wall surfaces, permeates the interconnecting porous wall or is located both at on-wall surfaces and permeates the interconnecting porous wall of the second channel walls,
   wherein the catalytic washcoat in the first channels and the second channels, is each selected from the group consisting of a hydrocarbon trap, a three-way catalyst, a NOx absorber, an oxidation catalyst, a selective catalytic reduction (SCR) catalyst, a $H_2S$ trap, an ammonia slip catalyst (ASC) and a lean $NO_x$ catalyst,
   wherein the catalytic washcoat of the first channels is different from the catalytic washcoat of the second channels, and
   wherein the honeycomb substrate has an axial length L and the sum of the axial lengths of the washcoat coating in the first channel and the washcoat coating in the second channel is $\geq 100\%$ and $<130\%$ of the axial length L.

2. A catalysed honeycomb substrate of claim 1, wherein one or both catalytic washcoat comprises one or more molecular sieve.

3. A catalysed honeycomb substrate according to claim 2, wherein the molecular sieve is un-metallised or metallised with at least one metal selected from the group consisting of Cr, Co, Cu, Fe, Hf, La, Ce, In, V, Mn, Ni, Zn, Ga and the precious metals Ag, Au, Pt, Pd and Rh.

4. An exhaust system for an internal combustion engine, which system comprising a catalysed honeycomb substrate of any preceding claim.

5. An exhaust system according to claim 4, wherein the second channels are oriented to the upstream side.

6. An exhaust system according to claim 4 or claim 5, comprising means for injecting a reductant fluid into exhaust gas upstream of the filter.

7. An exhaust system according to claim 6, wherein a catalytic washcoat is an SCR catalyst and the reductant fluid is a nitrogenous compound.

8. An internal combustion engine comprising an exhaust system according to any of claims 4 to 7.

9. A method of making a catalysed wall-flow filter substrate according to any of claims 1-3 for treating exhaust gas comprising particulate matter emitted from an internal combustion engine, which method comprising:

   providing a honeycomb substrate monolith having a first end and a second end, having physical properties and parameters pre-selected for use in a honeycomb wall-flow filter substrate and comprising an array of interconnecting porous walls defining an array of longitudinally extending first and second channels,
   wherein the first channels are bordered on their sides by the second channels and wherein the first channels have a larger hydraulic diameter than the second channels,
   wherein the first channels are open at both the first and the second end of the honeycomb substrate monolith and the second channels are open at the first end of the honeycomb substrate monolith but are blocked with end plugs at the second end thereof,
   contacting porous channel wall surfaces which define the first channels of the honeycomb substrate monolith with a liquid catalytic washcoat to produce a coated honeycomb substrate monolith, wherein the liquid catalytic washcoat is coated on first channel walls from the second end of the honeycomb substrate monolith, and wherein at least one of:

a liquid catalytic washcoat solids content;
a liquid catalytic washcoat rheology;
a porosity of the honeycomb substrate monolith;
a mean pore size of the honeycomb substrate monolith;
a liquid catalytic washcoat volumetric mean particle size; and
a liquid catalytic washcoat D90 (by volume),

is preselected so that at least some of the liquid catalytic washcoat remains on a surface of the porous channel walls of the first channels or both remains on the surface of the porous channel walls and permeates the porous channel walls of the first channels;
drying and calcining the coated honeycomb substrate monolith; and
inserting end plugs into open ends of the first channels at the first end of the honeycomb substrate monolith to form the catalysed wall-flow filter substrate and washcoating the interconnecting porous walls and/or the surfaces of the second channels from the direction of the open ends of the second channels,
wherein the catalytic washcoat on the channel walls of the first channels; located in the interconnecting porous walls; or located on the second channel walls, is each selected from the group consisting of a hydrocarbon trap, a three-way catalyst, a NOx absorber, an oxidation catalyst, a selective catalytic reduction (SCR) catalyst, a $H_2S$ trap, an ammonia slip catalyst (ASC) and a lean $NO_x$ catalyst, and
wherein the catalytic washcoat of the first channels is different from the catalytic washcoat of the second channels.

10. A method according to claim 9, a region of the channel walls contacted by end plugs are free of catalytic washcoat.

11. A method according to claim 9 or claim 10, wherein a cement composition for forming the end plugs in the step of inserting plugs into at least the first end or the second end of the honeycomb substrate to form the wall-flow filter is a low temperature setting cement.

**Patentansprüche**

1. Katalysierter wabenförmiger Wandstromfilter zur Behandlung von Abgas, das Partikelmaterial aus einem Verbrennungsmotor umfasst, wobei der Filter umfasst:

- ein wabenförmiges Substrat mit einem ersten Ende und einem zweiten Ende, das eine Anordnung von verbindenden porösen Wänden umfasst, die eine Anordnung von sich in Längsrichtung erstreckenden ersten Kanälen und zweiten Kanälen definieren,
- wobei die ersten Kanäle an ihren Seiten durch die zweiten Kanäle begrenzt sind und einen größeren hydraulischen Durchmesser als die zweiten Kanäle aufweisen,
- wobei die ersten Kanäle an einem ersten Ende des wabenförmigen Substrats endverschlossen sind und die zweiten Kanäle an einem zweiten Ende des wabenförmigen Substrats endverschlossen sind,
- wobei die Kanalwandflächen der ersten Kanäle eine katalytische Washcoat-Beschichtung vom Wandtyp umfassen,
- wobei eine katalytische Washcoat-Beschichtung an Wandflächen befindlich ist, die die verbindende poröse Wand durchdringt, oder sowohl an Wandflächen befindlich ist als auch die verbindende poröse Wand der zweiten Kanalwände durchdringt,
- wobei der katalytische Washcoat in den ersten Kanälen und den zweiten Kanälen jeweils ausgewählt wird aus der Gruppe bestehend aus einer Kohlenwasserstofffalle, einem Drei-Wege-Katalysator, einem $NO_x$-Absorber, einem Oxidationskatalysator, einem selektiven katalytischen Reduktionskatalysator (SCR), einer $H_2S$-Falle, einem Ammoniak-Schlupfkatalysator (ASC) und einem mageren $NO_x$-Katalysator,
- wobei sich der katalytische Washcoat der ersten Kanäle von dem katalytischen Washcoat der zweiten Kanäle unterscheidet, und
- wobei das wabenförmige Substrat eine axiale Länge L aufweist und die Summe der axialen Längen der Washcoat-Beschichtung im ersten Kanal und der Washcoat-Beschichtung im zweiten Kanal $\geq 100\%$ und $< 130\%$ der axialen Länge L ist.

2. Katalysiertes wabenförmiges Substrat nach Anspruch 1, wobei eines oder beide der katalytischen Washcoats ein oder mehrere Molekularsiebe umfassen.

3. Katalysiertes wabenförmiges Substrat nach Anspruch 2, wobei das Molekularsieb unmetallisiert oder metallisiert ist mit mindestens einem Metall, ausgewählt aus der Gruppe bestehend aus Cr, Co, Cu, Fe, Hf, La, Ce, In, V, Mn, Ni, Zn, Ga und den Edelmetallen Ag, Au, Pt, Pd und Rh.

4. Abgassystem für einen Verbrennungsmotor, wobei das System ein katalysiertes wabenförmiges Substrat nach einem der vorhergehenden Anspruch umfasst.

5. Abgassystem nach Anspruch 4, wobei die zweiten Kanäle zur vorgelagerten Seite ausgerichtet sind.

6. Abgassystem nach Anspruch 4 oder Anspruch 5, das Mittel zum Einspritzen eines Reduktionsmittelfluids in das Abgas stromaufwärts des Filters umfasst.

7. Abgassystem nach Anspruch 6, wobei ein katalytischer Washcoat ein SCR-Katalysator ist und das Reduktionsmittelfluid eine stickstoffhaltige Verbindung ist.

8. Verbrennungsmotor, der ein Abgassystem nach einem der Ansprüche 4 bis 7 umfasst.

9. Verfahren zur Herstellung eines katalysierten Wandstrom-Filtersubstrats nach einem der Ansprüche 1-3 zur Behandlung von Abgas, das Partikelmaterial aus einem Verbrennungsmotor umfasst, wobei das Verfahren umfasst:

- Bereitstellen eines wabenförmigen Substratmonolithen mit einem ersten Ende und einem zweiten Ende, mit physikalischen Eigenschaften und Parametern, die für die Verwendung in einem wabenförmigen Wandstrom-Filtersubstrat vorausgewählt werden, mit einer Anordnung von verbindenden porösen Wänden, die eine Anordnung von sich in Längsrichtung erstreckenden ersten und zweiten Kanälen definieren,
- wobei die ersten Kanäle an ihren Seiten durch die zweiten Kanäle begrenzt sind und wobei die ersten Kanäle einen größeren hydraulischen Durchmesser als die zweiten Kanäle aufweisen,
- wobei die ersten Kanäle sowohl am ersten als auch am zweiten Ende des wabenförmigen Substratmonolithen offen sind und die zweiten Kanäle am ersten Ende des wabenförmigen Substratmonolithen offen sind, aber mit Endverschlüssen am zweiten Ende davon blockiert sind,
- Inkontaktbringen der porösen Kanalwandflächen, die die ersten Kanäle des wabenförmigen Substratmonolithen definieren, mit einem flüssigen katalytischen Washcoat, um einen beschichteten wabenförmigen Substratmonolithen herzustellen, wobei der flüssige katalytische Washcoat auf den ersten Kanalwänden vom zweiten Ende des wabenförmigen Substratmonolithen aus beschichtet ist, und wobei mindestens:

- ein flüssiger katalytischer Washcoat-Feststoffgehalt;
- eine flüssige katalytische Washcoat-Rheologie;
- eine Porosität des wabenförmigen Substratmonolithen;
- eine mittlere Porengröße des wabenförmigen Substratmonolithen;
- eine flüssige katalytische Washcoat-Beschichtung mit volumetrischer mittlerer Partikelgröße; und
- ein flüssiger katalytischer Washcoat D90 (bezogen auf das Volumen)

so vorausgewählt werden, dass mindestens ein Teil der flüssigen katalytischen Washcoat-Beschichtung auf einer Fläche der porösen Kanalwände der ersten Kanäle verbleibt oder beide auf der Fläche der porösen Kanalwände verbleiben und die porösen Kanalwände der ersten Kanäle durchdringen;
- Trocknen und Kalzinieren des beschichteten wabenförmigen Substratmonolithen; und
- Einsetzen von Endverschlüssen in die offenen Enden der ersten Kanäle am ersten Ende des wabenförmigen Substratmonolithen, um das katalysierte Wandstrom-Filtersubstrat zu bilden, und Washcoat-Beschichten der verbindenden porösen Wände und/oder der Flächen der zweiten Kanäle aus Richtung der offenen Enden der zweiten Kanäle,
- wobei die katalytische Washcoat-Beschichtung an den Kanalwänden der ersten Kanäle, befindlich in den verbindenden porösen Wänden, oder befindlich an den zweiten Kanalwänden, jeweils ausgewählt werden aus der Gruppe bestehend aus einer Kohlenwasserstofffalle, einem Drei-Wege-Katalysator, einem $NO_x$-Absorber, einem Oxidationskatalysator, einem selektiven katalytischen Reduktionskatalysator (SCR), einer $H_2S$-Falle, einem Ammoniak-Schlupfkatalysator (ASC) und einem mageren $NO_x$-Katalysator, und
- wobei der katalytische Washcoat der ersten Kanäle unterschiedlich zu dem katalytischen Washcoat der zweiten Kanäle ist.

**10.** Verfahren nach Anspruch 9, wobei ein Bereich der Kanalwände, der durch Endverschlüsse kontaktiert wird, frei von katalytischem Washcoat ist.

**11.** Verfahren nach Anspruch 9 oder Anspruch 10, wobei eine Zementzusammensetzung zum Bilden der Endverschlüsse im Schritt des Einsetzens der Verschlüsse in mindestens das erste Ende oder das zweite Ende des wabenförmigen Substrats zum Bilden des Wandstromfilters ein Niedertemperatur-Härtezement ist.

**Revendications**

**1.** Filtre à écoulement sur paroi en nid d'abeille catalysé pour le traitement de gaz d'échappement comprenant de la matière particulaire émis depuis un moteur à combustion interne, lequel filtre comprenant :

un substrat en nid d'abeille ayant une première extrémité et une deuxième extrémité et comprenant un réseau de parois poreuses interconnectées définissant un réseau de premiers canaux et de deuxièmes canaux s'étendant longitudinalement,

dans lequel les premiers canaux sont bordés sur leurs côtés par les deuxièmes canaux et ont un diamètre hydraulique plus important que les deuxièmes canaux,

dans lequel les premiers canaux sont obturés à l'extrémité au niveau d'une première extrémité du substrat en nid d'abeille et les deuxièmes canaux sont obturés à l'extrémité au niveau d'une deuxième extrémité du substrat en nid d'abeille,

dans lequel des surfaces de paroi de canal des premiers canaux comprennent une couche lavis catalytique de type sur paroi dans lequel une couche lavis catalytique est située au niveau de surfaces sur paroi, s'infiltre dans la paroi poreuse interconnectée ou à la fois est située au niveau de surfaces sur paroi et s'infiltre dans la paroi poreuse interconnectée des parois de deuxième canal,

dans lequel la couche lavis catalytique dans les premiers canaux et les deuxièmes canaux est à chaque fois sélectionnée dans le groupe constitué d'un piège à hydrocarbure, d'un catalyseur à trois voies, d'un absorbeur de NOx, d'un catalyseur d'oxydation, d'un catalyseur de réduction catalytique sélective (SCR), d'un piège à $H_2S$, d'un catalyseur d'élimination de fuite d'ammoniac (ASC) et d'un catalyseur de $NO_x$ pauvre, dans lequel la couche lavis catalytique des premiers canaux est différente de la couche lavis catalytique des deuxièmes canaux, et

dans lequel le substrat en nid d'abeille a une longueur axiale L et la somme des longueurs axiales du revêtement de couche lavis dans le premier canal et du revêtement de couche lavis dans le deuxième canal est ≥ 100 % et < 130 % de la longueur axiale L.

**2.** Substrat en nid d'abeille catalysé selon la revendication 1, dans lequel une couche lavis catalytique ou les deux comprennent un tamis moléculaire ou plus.

**3.** Substrat en nid d'abeille catalysé selon la revendication 2, dans lequel le tamis moléculaire est non métallisé ou métallisé avec au moins un métal sélectionné dans le groupe constitué de Cr, Co, Cu, Fe, Hf, La, Ce, In, V, Mn, Ni, Zn, Ga et des métaux précieux Ag, Au, Pt, Pd et Rh.

**4.** Système d'échappement pour un moteur à combustion interne, lequel système comprenant un substrat en nid d'abeille catalysé selon l'une quelconque des revendications précédentes.

**5.** Système d'échappement selon la revendication 4, dans lequel les deuxièmes canaux sont orientés vers le côté en amont.

**6.** Système d'échappement selon la revendication 4 ou la revendication 5, comprenant des moyens pour injecter un fluide réducteur dans du gaz d'échappement en amont du filtre.

**7.** Système d'échappement selon la revendication 6, dans lequel une couche lavis catalytique est un catalyseur de SCR et le fluide réducteur est un composé azoté.

**8.** Moteur à combustion interne comprenant un système d'échappement selon l'une quelconque des revendications 4 à 7.

**9.** Procédé de réalisation d'un substrat de filtre à écoulement sur paroi catalysé selon l'une quelconque des revendications 1 à 3 pour le traitement de gaz d'échappement comprenant de la matière particulaire émis depuis un moteur à combustion interne, lequel procédé comprenant :

la fourniture d'un monolithe de substrat en nid d'abeille ayant une première extrémité et une deuxième extrémité, ayant des propriétés physiques et des paramètres présélectionnés pour une utilisation dans un substrat de filtre à écoulement sur paroi en nid d'abeille et comprenant un réseau de parois poreuses interconnectées définissant un réseau de premiers et deuxièmes canaux s'étendant longitudinalement,

dans lequel les premiers canaux sont bordés sur leurs côtés par les deuxièmes canaux et dans lequel les premiers canaux ont un diamètre hydraulique plus important que les deuxièmes canaux,

dans lequel les premiers canaux sont ouverts à la fois au niveau de la première et de la deuxième extrémité du monolithe de substrat en nid d'abeille et les deuxièmes canaux sont ouverts au niveau de la première extrémité du monolithe de substrat en nid d'abeille mais sont obturés avec des bouchons d'extrémité au niveau de la deuxième extrémité de celui-ci,

la mise en contact de surfaces de paroi de canal poreuse qui définissent les premiers canaux du monolithe de substrat en nid d'abeille avec une couche lavis catalytique liquide afin de produire un monolithe de substrat en nid d'abeille revêtu, dans lequel la couche lavis catalytique liquide est revêtue sur des parois de premier canal depuis la deuxième extrémité du monolithe de substrat en nid d'abeille, et dans lequel au moins un élément parmi :

une teneur en matières solides de couche lavis catalytique liquide ;
une rhéologie de couche lavis catalytique liquide ;
une porosité du monolithe de substrat en nid d'abeille ;
une taille de pore moyenne du monolithe de substrat en nid d'abeille ;
une taille de particule moyenne volumétrique de couche lavis catalytique liquide ; et
un D90 (en volume) de couche lavis catalytique liquide,

est présélectionné de sorte qu'au moins une partie de la couche lavis catalytique liquide reste sur une surface des parois de canal poreuses des premiers canaux ou à la fois reste sur la surface des parois de canal poreuses et s'infiltre dans les parois de canal poreuses des premiers canaux ;

le séchage et la calcination du monolithe de substrat en nid d'abeille revêtu ; et

l'insertion de bouchons d'extrémité dans des extrémités ouvertes des premiers canaux au niveau de la première extrémité du monolithe de substrat en nid d'abeille afin de former le substrat de filtre à écoulement sur paroi catalysé et l'encollage des parois poreuses interconnectées et/ou des surfaces des deuxièmes canaux depuis la direction des extrémités ouvertes des deuxièmes canaux,

dans lequel la couche lavis catalytique sur les parois de canal des premiers canaux ; située dans les parois poreuses interconnectées ; ou

située sur les parois de deuxième canal, est à chaque fois sélectionnée dans le groupe constitué d'un piège à hydrocarbure, d'un catalyseur à trois voies, d'un absorbeur de NOx, d'un catalyseur d'oxydation, d'un catalyseur de réduction catalytique sélective (SCR), d'un piège à $H_2S$, d'un catalyseur d'élimination de fuite d'ammoniac (ASC) et d'un catalyseur de $NO_x$ pauvre, et

dans lequel la couche lavis catalytique des premiers canaux est différente de la couche lavis catalytique des deuxièmes canaux.

10. Procédé selon la revendication 9, une région des parois de canal mise en contact avec des bouchons d'extrémité étant exempte de couche lavis catalytique.

11. Procédé selon la revendication 9 ou la revendication 10, dans lequel une composition de ciment pour la formation des bouchons d'extrémité dans l'étape d'insertion de bouchons dans au moins la première extrémité ou la deuxième extrémité du substrat en nid d'abeille afin de former le filtre à écoulement sur paroi est un ciment durcissant à basse température.

FIG. 1A

FIG. 1B

FIG. 2A

FIG. 2B

FIG. 3

FIG. 4

FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5221484 A
- EP 341832 A
- WO 2005030365 A
- US 2011020185 A1
- EP 1911507 A1
- WO 9947260 A
- WO 2011080525 A
- US 5543181 A
- US 5473887 A
- WO 2012175948 A
- WO 2008075111 A
- WO 9956876 A
- WO 2008132452 A
- WO 2006040842 A
- WO 2007116881 A
- EP 1837063 A

**Non-patent literature cited in the description**

- **RONALD M. HECK et al.** Catalytic Air Pollution Control - Commercial Technology. John Wiley & Sons, Inc, 2009, 338-340